(19) Europäisches Patentamt
European Patent Office
Office européen des brevets

(11) **EP 3 133 123 B1**

(12) **EUROPEAN PATENT SPECIFICATION**

(45) Date of publication and mention
of the grant of the patent:
**28.12.2022 Bulletin 2022/52**

(21) Application number: **15780540.9**

(22) Date of filing: **13.04.2015**

(51) International Patent Classification (IPC):
**C08L 77/06** (2006.01)    **C08K 5/053** (2006.01)
**C08K 5/103** (2006.01)    **C08K 7/04** (2006.01)
**C08L 29/02** (2006.01)

(52) Cooperative Patent Classification (CPC):
(C-Sets available)
**C08K 5/053; C08G 69/26; C08G 69/28; C08K 9/08;
C08L 77/06;** C08K 7/06; C08K 7/14; C08L 2201/08;
C08L 2205/025; C08L 2205/06          (Cont.)

(86) International application number:
**PCT/JP2015/061305**

(87) International publication number:
**WO 2015/159834 (22.10.2015 Gazette 2015/42)**

(54) **SEMIAROMATIC POLYAMIDE RESIN COMPOSITION AND FORMED BODY OBTAINED BY FORMING SAME**

HALBAROMATISCHE POLYAMIDHARZZUSAMMENSETZUNG UND GEFORMTER KÖRPER ERHÄLTLICH DURCH FORMUNG DERSELBEN

COMPOSITION DE RÉSINE DE POLYAMIDE SEMI-AROMATIQUE ET CORPS FORMÉ OBTENU PAR FORMAGE DE CETTE DERNIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.04.2014   JP 2014083187
11.11.2014   JP 2014228974**

(43) Date of publication of application:
**22.02.2017  Bulletin 2017/08**

(73) Proprietor: **UNITIKA LTD.**
**Chuo-ku
Osaka-shi
Osaka 541-8566 (JP)**

(72) Inventors:
• **MII, Junichi**
**Kyoto 611-0021 (JP)**
• **AMARI, Taiyo**
**Kyoto 611-0021 (JP)**
• **KAMIKAWA, Hiroo**
**Kyoto 611-0021 (JP)**

(74) Representative: **Vigand, Philippe et al
Novagraaf International SA
Chemin de l'Echo 3
1213 Onex - Genève (CH)**

(56) References cited:
WO-A1-2013/163012      CN-A- 102 093 706
JP-A- S5 365 341       JP-A- 2007 154 110
JP-A- 2007 182 551     JP-A- 2008 019 440
JP-A- 2011 529 986     JP-A- 2011 529 993
JP-A- 2012 107 217     JP-A- 2012 122 066
JP-A- 2013 500 883

(52) Cooperative Patent Classification (CPC): (Cont.)

C-Sets
**C08K 5/053, C08L 77/06;**
**C08K 9/08, C08L 77/06;**
**C08L 29/02, C08K 3/04, C08L 77/00;**
**C08L 77/06, C08K 5/053, C08K 7/14**

**Description**

Technical Field

The present invention relates to a semiaromatic polyamide resin composition.

Background Art

Semiaromatic polyamides are excellent in heat resistance and mechanical properties, and accordingly are widely used as forming materials. Among semiaromatic polyamides, semiaromatic polyamides having a melting point of 300°C or higher are used in applications highly demanding heat resistance such as applications to engine peripheries of vehicles, LED illumination and the like.

As is known, in general, the higher the melting points of semiaromatic polyamides, the poorer are the fluidities of the semiaromatic polyamides during melt processing, and the more easily occurs the degradation of physical properties (heat aging) in high temperature environments.

Patent Literature 1 discloses the improvement of the fluidity during melt processing of a semiaromatic polyamide as a result of blocking the terminals of the semiaromatic polyamide with a long-chain monocarboxylic acid.

Patent Literature 2 discloses the improvement of the fluidity as a result of mixing a polyhydric alcohol. Patent Literature 3 and Patent Literature 4 also disclose the suppression of heat aging as a result of mixing a polyhydric alcohol. However, these techniques for mixing polyhydric alcohols relate to aliphatic polyamides or copolymer-type semiaromatic polyamides having melting points substantially lower than 310°C.

On the other hand, a homopolymer-type semiaromatic polyamide excellent in heat resistance as compared with the above-described copolymer-type semiaromatic polyamides has a large heat of crystal fusion, and hence it is necessary to set the melt processing temperature at a temperature higher than the peak temperature corresponding to the melting point by 10 to 20°C as compared with the case of the copolymer type. Accordingly, when the homopolymer-type semiaromatic polyamide is retained at a melt processing temperature of 330°C or higher for a long period of time, there has occurred a problem of the degradation of physical properties due to thermal decomposition or the exterior appearance failure of the formed body in such a way that there have sometimes occurred problems not becoming obvious with the copolymer-type semiaromatic polyamide.

Patent Literature 5 discloses the suppression of heat aging by mixing a cooper compound with a homopolymer-type semiaromatic polyamide. However, the suppression effect of the heat aging due to the mixing of a copper compound is not sufficient, and when the resin composition including the copper compound is retained at a melt processing temperature, which is a high temperature, for a long period of time, there has sometimes occurred a problem of the degradation of physical properties due to thermal decomposition or the exterior appearance failure of the formed body.

In other words, in the forming processing of a semiaromatic polyamide having a melting point of 300°C or higher, in particular, a highly crystalline semiaromatic polyamide free from copolymerization, in addition to the foregoing problem of the fluidity failure during melt processing or the heat aging, there has been a problem of the so-called retention stability, due to the retention in a molten state in the apparatus, such as the degradation of the physical properties due to thermal decomposition, or the exterior appearance failure caused in the formed body.

Finally, Patent Literature 6 discloses according to its abstract a thermoplastic polyamide composition including a) a polyamide resin; b) one or more polyhydric alcohols; c) one or more anti-whitening agents selected from the group consisting of poly(ethylene glycol), poly(ethylene glycol) diesters, poly(propylene glycol), poly(propylene glycol) diesters; and styrene-isoprene-styrene block copolymers; and mixtures of these; d) a lubricant; e) one or more reinforcement agents; and, optionally, f) a polymeric toughener comprising a reactive functional group and/or a metal salt of a carboxylic acid.

Citation List

Patent Literature

Patent Literature 1: WO2013/042541
Patent Literature 2: JP2000-345031A
Patent Literature 3: JP2011-529991A
Patent Literature 4: JP2013-538927A
Patent Literature 5: JP2003-055549A
Patent Literature 6: WO2013/163012

Summary of Invention

Technical Problem

The present invention solves the above-described problems, and an object of the present invention is to provide a semiaromatic polyamide resin composition improved in the fluidity during melt processing, and in addition, effectively suppressed in the degradation of the retention stability and the heat aging.

Solution to Problem

The present invention is defined in the appended claims. The present inventors performed a continuous diligent study in order to solve the foregoing technical problem, and consequently have reached the present invention by discovering that the foregoing technical problem can be solved by mixing a specific amount of a polyhydric alcohol with a semiaromatic polyamide having a melting point of 300 to 350°C. Specifically, aspects of the present invention include the following features.

A semiaromatic polyamide resin composition including a semiaromatic polyamide (A) and a polyhydric alcohol (B), and nigrosine,

wherein the mass ratio (A/B) between the semiaromatic polyamide (A) and the polyhydric alcohol (B) is 99.95/0.05 to 90/10; and

the semiaromatic polyamide (A) includes as the constituent components thereof an aromatic dicarboxylic acid component an aliphatic diamine component that is 1,10-decanediamine alone and a monocarboxylic acid component that is an aliphatic acid having a molecular weight of 140 g/mol or more, and has a melting point of 300 to 350°C.

Advantageously, the content of the monocarboxylic acid component is 0.3 to 4.0 mol% in relation to the whole of the monomer components constituting the semiaromatic polyamide (A).

Advantageously, the polyhydric alcohol (B) is dipentaerythritol.

Advantageously, the polyhydric alcohol (B) forms at least one ester bond with a carboxylic acid, leaving two or more hydroxyl groups of the polyhydric alcohol.

Advantageously, the semiaromatic polyamide resin composition further includes 5 to 200 parts by mass of a fibrous reinforcing material (C) in relation to 100 parts by mass of the total amount of the semiaromatic polyamide (A) and the polyhydric alcohol (B).

Advantageously, the fibrous reinforcing material (C) is treated with a surface treatment agent including an acid component.

Advantageously, the fibrous reinforcing material (C) is a glass fiber and/or a carbon fiber.

Advantageously, the semiaromatic polyamide resin composition further includes a polyamide other than the semiaromatic polyamide (A).

Another aspect relates to a formed body obtained by forming the semiaromatic polyamide resin composition according to aspects above.

Advantageous Effects of Invention

According to the present invention, it is possible to provide a semiaromatic polyamide resin composition improved in the fluidity during melt processing, and effectively suppressed additionally in the degradation of the retention stability and the heat aging.

Description of Embodiments

Hereinafter, the present invention is described in detail.

The semiaromatic polyamide resin composition of the present invention includes a semiaromatic polyamide (A) and a polyhydric alcohol (B) and nigrosine.

The semiaromatic polyamide (A) constituting the semiaromatic polyamide resin composition of the present invention includes as the constituent components thereof an aromatic dicarboxylic acid component and an aliphatic diamine component. The semiaromatic polyamide (A) may include a copolymerization component(s); however, from the viewpoint of, for example, heat resistance, mechanical strength, chemical resistance and rapid crystallization allowing a formed body to be obtained with a low-temperature mold, the semiaromatic polyamide (A) is preferably not copolymerized, namely, composed of a single aromatic dicarboxylic acid component and a single aliphatic diamine component.

In the present invention, examples of the aromatic dicarboxylic acid component constituting the semiaromatic polyamide (A) include: terephthalic acid, phthalic acid, isophthalic acid and naphthalene dicarboxylic acid. Preferable among these are terephthalic acid because of being capable of improving the heat resistance.

In addition to the aromatic dicarboxylic acid component, examples of the copolymerizing acid component include the following dicarboxylic acids: aliphatic dicarboxylic acids such as oxalic acid, malonic acid, succinic acid, glutaric acid, adipic acid, pimelic acid, suberic acid, azelaic acid, sebacic acid, undecanedioic acid and dodecanedioic acid; and alicyclic dicarboxylic acids such as cyclohexane dicarboxylic acid. In order not to decrease the melting point or not to degrade the heat resistance of the semiaromatic polyamide (A), the aromatic dicarboxylic acid other than terephthalic acid, the aliphatic dicarboxylic acids or the alicyclic dicarboxylic acid preferably has a copolymerization proportion of 5 mol% or less in relation to the total number of moles of the raw material monomers, and is more preferably substantially not included.

Examples of aliphatic diamines include: 1,2-ethanediamine, 1,3-propanediamine, 1,4-butanediamine, 1,5-pentanediamine, 1,6-hexanediamine, 1,7-heptanediamine, 1,8-octanediamine, 1,9-nonandiamine, 1,10-decanediamine, 1,11-undecanediamine, 1,12-dodecanediamine, 2-methyl-1,5-pentanediamine and 2-methyl-1,8-octanediamine. The claimed invention includes 1,10-decanediamine alone because 1,10-decanediamine is satisfactory in the balance between the heat resistance and the mechanical properties, and allows a formed body excellent in chemical resistance to be obtained.

Examples of the copolymerizing diamine component other than the aliphatic diamine component include alicyclic diamines such as cyclohexanediamine and aromatic diamines such as xylylenediamine and benzene diamine. In order not to impair the foregoing properties provided by the aliphatic diamine component, the alicyclic diamine other than the aliphatic diamine component or the aromatic diamine preferably has a copolymerization proportion of 5 mol% or less in relation to the total number of moles of the raw material monomers, and is more preferably substantially not included.

In the present invention, examples of the polymerization component other than the foregoing copolymerization components, constituting the semiaromatic polyamide (A) include: lactams such as caprolactam and laurolactam; and ω-aminocarboxylic acids such as aminocaproic acid and 11-aminoundecanoic acid. In order not to degrade the heat resistance, mechanical properties and chemical resistance of the semiaromatic polyamide (A), each of these foregoing copolymerization components preferably has a copolymerization proportion of 5 mol% or less in relation to the total number of moles of the raw material monomers, and is more preferably substantially not included.

As described above, the semiaromatic polyamide (A) in the present invention preferably includes a single aromatic dicarboxylic acid component and a single aliphatic diamine component; however, the semiaromatic polyamide resin composition of the present invention may include two or more semiaromatic polyamides (A) different from each other in the constituent monomer components. The inclusion of two or more semiaromatic polyamides (A) different from each other in the constituent monomer components allows the semiaromatic polyamide resin composition to be further excellent in the surface exterior appearance and to be suppressed in the heat aging.

In the present invention, in order to enhance the fluidity and the demolding property, the semiaromatic polyamide (A) includes a monocarboxylic acid component as a constituent component thereof. The content of the monocarboxylic acid component is preferably 0.3 to 4.0 mol%, more preferably 0.3 to 3.0 mol%, furthermore preferably 0.3 to 2.5 mol% and particularly preferably 0.8 to 2.5 mol%.

The molecular weight of the monocarboxylic acid is 140 or more and preferably 170 or more. The molecular weight of the monocarboxylic acid falling in a range of 140 or more allows the semiaromatic polyamide (A) to be improved in fluidity and demolding property. Moreover, the improvement of the fluidity during melt processing allows the processing temperature to be decreased, and consequently, the semiaromatic polyamide (A) is improved in the retention stability during melt processing. When the resin composition includes, together with the polyhydric alcohol (B), the semiaromatic polyamide (A) including a monocarboxylic acid component having a molecular weight of 140 or more, although the crystallization rate during forming remains unchanged, the crystallization rate of the obtained formed body is improved. Consequently, the chemical resistance of the formed body is synergistically improved. In the field of vehicles, the formed bodies such as the components brought into contact with antifreeze are required to have chemical resistance, and the resin composition including the semiaromatic polyamide (A) including the monocarboxylic acid component having a molecular weight of 140 or more and the polyhydric alcohol (B) is particularly useful for such applications as requiring chemical resistance.

Examples of monocarboxylic acids include an aliphatic monocarboxylic acid, an alicyclic monocarboxylic acid and an aromatic monocarboxylic acid; the claimed invention includes an aliphatic monocarboxylic acid from the viewpoint of fluidity and demolding property.

Examples of the aliphatic monocarboxylic acid having a molecular weight of 140 or more include: caprylic acid, nonanoic acid, decanoic acid, lauric acid, myristic acid, palmitic acid, stearic acid and behenic acid. Among these, stearic acid is preferable because of being high in versatility.

Examples of alicyclic monocarboxylic acids having a molecular weight of 140 or more include 4-ethyl cyclohexanecarboxylic acid, 4-hexylcyclohexanecarboxylic acid and 4-laurylcyclohexanecarboxylic acid.

Examples of aromatic monocarboxylic acids having a molecular weight of 140 or more include 4-ethyl benzoic acid, 4-hexylbenzoic acid, 4-laurylbenzoic acid, alkylbenzoic acids, 1-naphthoic acid, 2-naphthoic acid and the derivatives of these.

The monocarboxylic acid component that is an aliphatic acid having a molecular weight of 140 g/mol or more may be used alone or in combination with a further monocarboxylic acid component or more thereof. A monocarboxylic acid having a molecular weight of 140 or more and a monocarboxylic acid having a molecular weight of less than 140 may also be used in combination. In the present invention, the molecular weight of a monocarboxylic acid means the molecular weight of the monocarboxylic acid as a raw material.

In the present invention, the semiaromatic polyamide (A) is required to have a melting point of 300 to 350°C, and the melting point thereof is preferably 310 to 350°C and more preferably 315 to 350°C. When the semiaromatic polyamide (A) has a melting point of lower than 300°C, the semiaromatic polyamide resin composition obtained therefrom is insufficient in heat resistance. On the other hand, when the semiaromatic polyamide (A) has a melting point exceeding 350°C, carbonation or decomposition proceeds during melt processing because the decomposition temperature of the polyamide bond is approximately 350°C. It is to be noted that in the present invention, the melting point is defined as the temperature at the top of the endothermic peak observed when the temperature is increased at a temperature increase rate of 20°C/min by using a differential scanning calorimeter (DSC).

In the semiaromatic polyamide (A) of the present invention, the relative viscosity as measured in 96% sulfuric acid, at 25°C and at a concentration of 1 g/dL is preferably 1.8 or more, more preferably 1.8 to 3.5 and furthermore preferably 2.2 to 3.1, from the viewpoint of the mechanical properties. When the relative viscosity of the semiaromatic polyamide (A) exceeds 3.5, sometimes the melt processing comes to be difficult.

The method for producing the semiaromatic polyamide (A) is not particularly limited; a hitherto known method such as a heat polymerization method or a solution polymerization method can be used. Among these, a heat polymerization method is preferably used because of being industrially advantageous. Examples of the heat polymerization method include a method including a step (i) of obtaining a reaction product from an aromatic dicarboxylic acid component and an aliphatic diamine component, and a step (ii) of polymerizing the obtained reaction product.

Examples of the step (i) include a method in which an aromatic dicarboxylic acid powder is beforehand heated to a temperature equal to or higher than the melting point of the aliphatic diamine and equal to or lower than the melting point of the aromatic dicarboxylic acid, and the aliphatic diamine is added to the aromatic dicarboxylic acid powder at this temperature in such a way that substantially no water is allowed to be contained so as for the powder state of the aromatic dicarboxylic acid to be maintained. Alternatively, examples of the step (i) include another method in which a suspension liquid composed of the aliphatic diamine in a molten state and the solid aromatic dicarboxylic acid is stirred for mixing to obtain a liquid mixture, then at a temperature lower than the melting point of the finally produced semiaromatic polyamide, the salt production reaction based on the reaction between the aromatic dicarboxylic acid and the aliphatic diamine and the production reaction of the low polymeric substance based on the polymerization of the produced salt are performed, and thus a mixture composed of the salt and the low polymeric substance is obtained. In this case, crushing may be performed while the reaction is being allowed to proceed, or alternatively, crushing may be performed after the mixture is once taken out after the reaction. As the step (i), the former method easy in controlling the shape of the reaction product is preferable.

Examples of the step (ii) include a method in which the reaction product obtained in the step (i) is subjected to a solid phase polymerization at a temperature lower than the melting point of the finally produced semiaromatic polyamide, and thus the molecular weight is increased to a predetermined molecular weight so as to be a high molecular weight to yield the semiaromatic polyamide. The solid phase polymerization is preferably performed at a polymerization temperature of 180 to 270°C, with a reaction time of 0.5 to 10 hours, in a flow of inert gas such as nitrogen.

The reaction apparatuses for the step (i) and the step (ii) are not particularly limited, and heretofore known apparatuses may be used as such reaction apparatuses. The step (i) and the step (ii) may be performed with the same apparatus, or with different apparatuses.

The heating method in the heating polymerization method is not particularly limited; examples of the heating method include: a method in which the reaction vessel is heated with a medium such as water, vapor or a heat transfer oil; a method in which the reaction vessel is heated with an electric heater; and a method in which utilized is the frictional heat provided by the motion of the content, such as the stirring heat generated by stirring. These heating methods may also be combined.

In the production of the semiaromatic polyamide (A), a polymerization catalyst may be used in order to increase the polymerization efficiency. Examples of the polymerization catalyst include phosphoric acid, phosphorous acid and hypophosphorous acid or the salts of these acids. Usually, the addition amount of the polymerization catalyst is preferably 2 mol% or less in relation to the whole of the monomer components constituting the semiaromatic polyamide (A).

The semiaromatic polyamide resin composition of the present invention is required to include a polyhydric alcohol (B).

In the present invention, the mass ratio (semiaromatic polyamide (A)/polyhydric alcohol (B)) between the semiaromatic polyamide (A) and the polyhydric alcohol (B) is required to be 99.95/0.05 to 90/10, and is preferably 99.9/0.1 to 92/8 and more preferably 99.8/0.2 to 95/5. When the mass proportion of the polyhydric alcohol (B) in relation to the total amount of the semiaromatic polyamide (A) and the polyhydric alcohol (B) is less than 0.05% by mass, the heat aging suppression effect is small. On the other hand, when the mass proportion of the polyhydric alcohol (B) in relation to the total amount of the semiaromatic polyamide (A) and the polyhydric alcohol (B) exceeds 10% by mass, the heat aging suppression effect is saturated and no further development of the effect can be expected. Additionally, the mechanical properties of the formed body are insufficient, the polyhydric alcohol is vaporized during melt processing to generate a large amount of gas, the retention stability is degraded, or the polyhydric alcohol bleeds out to the surface of the formed body to impair the exterior appearance of the formed body.

The polyhydric alcohol (B) used in the present invention is a compound containing two or more hydroxyl groups. Examples of the polyhydric alcohol (B) include: saturated aliphatic compounds, unsaturated aliphatic compounds, alicyclic compounds, aromatic compounds and saccharides. The polyhydric alcohol may contain one or a plurality of hetero atoms such as oxygen, nitrogen and/or sulfur atoms. The polyhydric alcohol (B) may contain a substituent other than the hydroxyl group such as an ether, carboxylic acid, amide or ester group. In addition, the polyhydric alcohol may be a low molecular weight compound or a polymer-type high molecular weight compound in which a certain monomer unit is repeated. The polyhydric alcohols (B) may be used each alone or in combinations of a plurality of types.

Examples of the saturated aliphatic compound include: dihydric low molecular weight alcohols such as ethylene glycol, diethylene glycol, triethylene glycol, 1,4-butanediol, 1,5-pentanediol, 2,2-dimethyl-1,3-propanediol and glycerin monomethacrylate; trihydric low molecular weight alcohols such as glycerol, trimethylol propane, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, ditrimethylolpropane, trimethylolpropane ethoxylate and trimethylolpropane propoxylate; tetra- or higher hydric low molecular weight alcohols such as pentaerythritol, dipentaerythritol and tripentaerythritol; and high molecular weight polyhydric alcohols such as polyethylene glycol, polyglycerin, polyvinyl alcohol, ethylene-vinyl alcohol copolymer resin, polyvinyl butyral (such as Mowital, manufactured by Kuraray Co., Ltd.), both-end hydroxyl group-terminated hydrogenated polybutadiene (such as GI Series, manufactured by Nippon Soda Co., Ltd.), both-end hydroxyl group-terminated polybutadiene (such as G Series, manufactured by Nippon Soda Co., Ltd.), dendritic polyalcohol (such as Boltorn, manufactured by Perstorp Corp.) and polycaprolactone polyol (such as PLACCEL 200 Series, 300 Series and 400 Series, manufactured by Daicel Corp.).

Examples of the unsaturated aliphatic compound include ricinoleyl alcohol.

Examples of the alicyclic compound include 1,2-cyclohexanediol, 1,3-cyclohexanediol, 1,4-cyclohexanediol, 1,3,5-cyclohexanetriol and 2,3-di-(2'-hydroxyethyl)-cyclohexan-1-ol.

Examples of the aromatic compound include: 1,2-benzenedimethanol, 1,3-benzenedimethanol, 1,4-benzenedimethanol, hydrobenzoin, 1,1,2,2-tetraphenylethane-1,2-diol, 1,1,1-tris-(4'-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane and bisphenoxyethanol fluorene.

Examples of the saccharides include: cyclodextrin, D-mannose, glucose, galactose, sucrose, fructose, xylose, arabinose, D-mannitol, D-sorbitol, D- or L-arabitol, xylitol, iditol, galactitol, talitol, allitol, altritol, guilitol, erythritol, threitol, ribitol, D-gulonic acid-γ-lactone.

Examples of the polyhydric alcohol having two or more hydroxyl groups, and at the same time, having at least one ester group as a substituent other than the hydroxyl group include: polyhydric alcohols forming at least one ester bond with a carboxylic acid, leaving two or more hydroxyl groups of the polyhydric alcohol such as esters formed of pentaerythritol and fatty acids (such as Unister H-Series, manufactured by NOF Corp.), and esters formed of dipentaerythritol and dibasic acids (such as PLENLIZER Series, manufactured by Ajinomoto Fine-Techno Co., Ltd.).

The semiaromatic polyamide resin composition of the present invention preferably further includes a fibrous reinforcing material (C). Examples of the fibrous reinforcing material (C) include, without being particularly limited to: glass fiber, carbon fiber, boron fiber, polyvinyl alcohol fiber, polyester fiber, acrylic fiber, wholly aromatic polyamide fiber, polybenzoxazole fiber, polytetrafluoroethylene fiber, kenaf fiber, bamboo fiber, hemp fiber, bagasse fiber, high strength polyethylene fiber, alumina fiber, silicon carbide fiber, potassium titanate fiber, brass fiber, stainless steel fiber, steel fiber, ceramic fiber and basalt fiber. Among these, glass fiber and carbon fiber are preferable because of being high in the improvement effect of mechanical properties, having heat resistance capable of withstanding the heating temperature during melt kneading with the semiaromatic polyamide resin, and being easily available. The fibrous reinforcing materials (C) may be used each alone or in combinations two or more thereof.

The fibrous reinforcing materials (C) such as glass fiber and carbon fiber are preferably surface treated with a surface treatment agent such as a sizing agent. The main component of the sizing agent is preferably a coupling agent or a coating film forming agent.

Examples of the coupling agent include coupling agents such as vinylsilane-based, acrylic silane-based, epoxysilane-based, aminosilane-based and aminotitanium-based coupling agents. Among these, the aminosilane-based coupling agent is preferable because of being high in the adhesion effect between the semiaromatic polyamide (A) and glass fiber or carbon fiber, and excellent in heat resistance.

Examples of the coating film forming agent include a urethane resin, an epoxy resin and an acrylic resin; among these, a urethane resin is preferable because of being high in the adhesion effect with glass fiber or carbon fiber, and excellent in heat resistance. The coating film forming agent preferably contains an acid component because the acid component improves the hydrolysis resistance of the resin composition. The acid component is preferably copolymerized with the resin that is the main component of the coating film forming agent. Examples of the acid component include: unsaturated monocarboxylic acid such as acrylic acid, methacrylic acid and cinnamic acid; unsaturated dicarboxylic acids such as maleic acid, fumaric acid and itaconic acid; and maleic anhydride.

The fiber length and the fiber diameter of the fibrous reinforcing material (C) are not particularly limited; however, the fiber length is preferably 0.1 to 7 mm and more preferably 0.5 to 6 mm. The fiber length of the fibrous reinforcing material (C) set to be 0.1 to 7 mm allows the resin composition to be reinforced without exerting any adverse effect on the formability. The fiber diameter of the fibrous reinforcing material (C) is preferably 3 to 20 $\mu$m and more preferably 5 to 13 $\mu$m. The fiber diameter of the fibrous reinforcing material (C) set to be 3 to 20 $\mu$m allows the resin composition to be reinforced without causing fiber breakage during melt kneading. Examples of the cross-sectional shape of the fibrous reinforcing material (C) include a circle, a rectangle, an ellipse, and other cross-sections; among these, a circle is preferable.

When the fibrous reinforcing material (C) is used, the content thereof is preferably 5 to 200 parts by mass, more preferably 10 to 180 parts by mass, furthermore preferably 20 to 150 parts by mass and particularly preferably 30 to 130 parts by mass, in relation to 100 parts by mass of the total amount of the semiaromatic polyamide (A) and the polyhydric alcohol (B). When the content of the fibrous reinforcing material (C) is less than 5 parts by mass, the improvement effect of mechanical properties is sometimes small. On the other hand, when the content of the fibrous reinforcing material (C) exceeds 200 parts by mass, the improvement effect of the mechanical properties is saturated and no further improvement effect can be expected, additionally the workability during melt kneading is degraded, and it is sometimes difficult to obtain the pellet of the semiaromatic polyamide resin composition. In addition, because the fluidity during melt processing is impaired to a large extent, for example, the situation comes to be such that the resin temperature is sometimes increased by shear heating, or the resin temperature has to be increased in order to improve the fluidity, sometimes to result in the decrease of the molecular weight, the degradation of the mechanical properties or the degradation of the retention stability.

The semiaromatic polyamide resin composition of the present invention can achieve a further improvement of the melt stability and the effective suppression of the heat aging by including various stabilizers such as an antioxidant, a light stabilizer and a heat stabilizer. Examples of the antioxidant include a hindered phenol antioxidant, a sulfur-based antioxidant and a phosphorus-based antioxidant; examples of the light stabilizer include a hindered amine light stabilizer. Among these, a phosphorus-based antioxidant is preferable for the suppression of heat aging, and a hindered phenol antioxidant and a hindered amine light stabilizer are preferable for the improvement of the retention stability.

Examples of the hindered phenol antioxidant include: n-octadecyl-3-(3',5'-di-t-butyl-4'-hydroxyphenyl)-propionate, n-octadecyl-3-(3'-methyl-5'-t-butyl-4'-hydroxyphenyl)-propionate, n-tetradecyl-3-(3',5'-di-t-butyl-4'-hydroxyphenyl)-propionate, 1,6-hexanediol-bis-[3-(3,5-di-t-butyl-4-hydroxyphenyl)-propionate], 1,4-butanediol-bis-[3-(3,5-di-t-butyl-4-hydroxyphenyl)-propionate], 2,2'-methylenebis-(4-methyl-t-butylphenol), triethylene glycol-bis-[3-(3-t-butyl-5-methyl-4-hydroxyphenyl)-propionate], tetrakis[methylene-3-(3',5'-di-t-butyl-4'-hydroxyphenyl)propionate]methane, 3,9-bis[2-{3-(3-t-butyl-4-hydroxy-5-methylphenyl)propionyloxy}-1,1-dimethylethyl]-2,4,8,10-tetraoxaspiro(5,5)undecane, N,N'-bis-3-(3',5'-di-t-butyl-4'-hydroxyphenyl)propionylhexamethylenediamine, N,N'-tetramethylene-bis-3-(3'-methyl-5'-t-butyl-4'-hydroxyphenol)propionyldiamine, N,N'-bis-[3-(3,5-di-t-butyl-4-hydroxyphenol)propionyl]hydrazine, N-salicyloyl-N'-salicylidenehydrazine, 3-(N-salicyloyl)amino-1,2,4-triazole, N,N'-bis[2-{3-(3,5-di-t-butyl-4-hydroxyphenyl)propionyloxy}ethyl]oxamide, pentaerithrityl-tetrakis[3-(3,5-di-t-butyl-4-hydroxyphenyl)propionate] and N,N'-hexamethylenebis-(3,5-di-t-butyl-4-hydroxy-hydrocinnamide).

Preferable among these are: triethylene glycol-bis-[3-(3-t-butyl-5-methyl-4-hydroxyphenyl)-propionate], tetrakis[methylene-3-(3',5'-di-t-butyl-4'-hydroxyphenyl)propionate]methane, 1,6-hexanediol-bis-[3-(3,5-di-t-butyl-4-hydroxyphenyl)-propionate], pentaerithrityl-tetrakis[3-(3,5-di-t-butyl-4-hydroxyphenyl)propionate] and N,N'-hexamethylenebis-(3,5-di-t-butyl-4-hydroxy-hydrocinnamide). The hindered phenol antioxidants may be used each alone or in combinations two or more thereof.

Examples of the commercially available hindered phenol antioxidant include: Adeka Stab AO-20, AO-30, AO-40, AO-50, AO-60, AO-70, AO-80 and AO-330 manufactured by Adeka Corp.; Irganox 245, 259, 565, 1010, 1035, 1076, 1098, 1222, 1330, 1425, 1520, 3114 and 5057 manufactured by Ciba Specialty Chemicals Inc.; Sumilizer BHT-R, MDP-S, BBM-S, WX-R, NW, BP-76, BP-101, GA-80, GM and GS manufactured by Sumitomo Chemical Industry Co., Ltd.; and Cyanox CY-1790 manufactured by Cyanamide Co.

Examples of the sulfur-based antioxidant include: distearyl 3,3'-thiodipropionate, pentaerithrityl tetrakis(3-laurylthiopropionate), 2-mercaptobenzimidazole, didodecyl 3,3'-thiodipropionate, dioctadecyl 3,3'-thiodipropionate, ditridecyl 3,4'-thiodipropionate and 2,2-bis[[3-(dodecylthio)-1-oxopropoxy]methyl]-1,3-propanediyl ester. Preferable among these are distearyl 3,3'-thiodipropionate and pentaerithrityl tetrakis(3-laurylthiopropionate). The sulfur-based antioxidants may be used each alone or in combinations of two or more thereof. Examples of the commercially available sulfur-based antioxidant include: Sumilizer TP-D and MB manufactured by Sumitomo Chemical Industry Co., Ltd.

The phosphorus-based antioxidant may be either an inorganic compound or an organic compound. Examples of the phosphorus-based antioxidant include: inorganic phosphoric acid salts such as monosodium phosphate, disodium phosphate, trisodium phosphate, sodium phosphite, calcium phosphite, magnesium phosphite and manganese phosphite; and organophosphorus compounds such as triphenyl phosphite, trioctadecyl phosphite, tridecyl phosphite, trinonylphenyl phosphite, diphenyl isodecyl phosphite, bis(2,6-di-tert-butyl-4-methylphenyl)pentaerythritol diphosphite, bis(2,4-di-tert-butylphenyl)pentaerythritol diphosphite, tris(2,4-di-tert-butylphenyl) phosphite, distearyl pentaerythritol diphosphite, bis(nonylphenyl)pentaerythritol diphosphite, 1,1'-biphenyl-4,4'-diylbis[bis(2,4-di-tert-butylphenyl)phosphonite], tetrakis(2,4-di-tert-butylphenyl)-4,4'-biphenylene diphosphonite, tetra(tridecyl)-4,4'-isopropylidenediphenyl diphosphite and 2,2-methylenebis(4,6-di-tert-butylphenyl)octyl phosphite. The phosphorus-based antioxidants may be used each alone or in combinations of two or more thereof. Examples of the commercially available phosphorus-based antioxidant include: Adeka Stab PEP-8, PEP-36, PEP-4C and PEP-24G manufactured by Adeka Corp.; and Hostanox P-EPQ manufactured by Clariant Japan K.K.

Examples of the hindered amine light stabilizer include: tetrakis(1,2,2,6,6-pentamethyl-4-piperidyl)butane-1,2,3,4-tetracarboxylate, tetrakis(2,2,6,6-tetramethyl-1-4-piperidyl)butane-1,2,3,4-tetracarboxylate, succinic acid dimethyl·1-(2hydroxy ethyl)-4-hydroxy-2,2,6,6-tetramethyl-4-piperidine polycondensate, bis(1,2,2,6,6-pentamethyl-4-piperidyl) sebacate and poly[(6-morpholino-S-triazine-2,4-diyl) (2,2,6,6-tetramethyl-4-piperidyl)imino]-hexamethylene[(2,2,6,6-tetramethyl-4-piperidy)imino]. The hindered amine light stabilizers may be used each alone or in combinations of two or more thereof. Examples of the commercially available stabilizer include: Nylostab S-EED manufactured by Clariant Japan K.K.; Biosorb 04 manufactured by Kyodo Chemical Co., Ltd.; Cyasorb UV-3346 manufactured by Cytec Inc.; Adeka Stab LA-57, LA-63P and LA-68 manufactured by Adeka Corp.; and Chimassorb 119 and 944, and Tinuvin 622 and 765 manufactured by BASF Inc.

The content of the stabilizer is preferably 0.005 to 3 parts by mass and more preferably 0.1 to 1 part by mass, in relation to 100 parts by mass of the total amount of the semiaromatic polyamide (A) and the polyhydric alcohol (B) .

The semiaromatic polyamide resin composition of the present invention can be further improved in the fluidity and the retention stability, can be made excellent in the surface exterior appearance, and can also be suppressed in heat aging, by including a polyamide(s) other than the semiaromatic polyamide (A).

Examples of the polyamide other than the semiaromatic polyamide (A) (hereinafter, sometimes, abbreviated as "the other polyamide") include, without being particularly limited to: semiaromatic polyamides being amorphous or having a melting point of lower than 300°C, and aliphatic polyamides.

Examples of the semiaromatic polyamide other than the semiaromatic polyamide (A) include a copolymer of terephthalic acid, isophthalic acid and an aliphatic diamine.

Examples of the aliphatic polyamide other than the semiaromatic polyamide (A) include: polyamide 6, polyamide 11, polyamide 12, polyamide 46, polyamide 410, polyamide 412, polyamide 510, polyamide 512, polyamide 66, polyamide 610, polyamide 612, polyamide 1010, polyamide 1012, polyamide 6/66, polyamide 66/1010, polyamide 66/612, polyamide 2Me5C, polyamide 6C, polyamide 8C, polyamide 9C, polyamide 10C and polyamide 12C. Here, C means 1,4-cyclohexanedicarboxylic acid, and 2Me5 means 2-methylpentamethylenediamine.

When the semiaromatic polyamide resin composition includes the other polyamide, the content of the other polyamide is preferably 1 to 100 parts by mass, more preferably 3 to 50 parts by mass and furthermore preferably 3 to 30 parts by mass, in relation to 100 parts by mass of the total amount of the semiaromatic polyamide (A) and the polyhydric alcohol (B). By including the other polyamide in an amount of 1 to 100 parts by mass in relation to 100 parts by mass of the total amount of (A) and (B), the semiaromatic polyamide resin composition of the present invention is improved in the fluidity during melt processing, and the surface exterior appearance of the obtained formed body is also improved. Moreover, the high fluidity allows the temperature of the melt processing to be decreased, and the retention stability during melt processing is more improved. The heat aging is also suppressed. When the content of the other polyamide is less than 1 part by mass, sometimes the forgoing effects are not obtained. On the other hand, when the content of the other polyamide exceeds 100 parts by mass, the heat resistance and the mechanical properties possessed by the semiaromatic polyamide (A) are sometimes impaired.

To the semiaromatic polyamide resin composition of the present invention, nigrosine is added and if necessary, other additives such as a filler, a colorant and an antistatic agent may further be added. Examples of the filler include: talc, a swelling clay mineral, silica, alumina, glass beads and graphite. Examples of the colorant include: pigments such as titanium oxide and carbon black; and dyes such as nigrosine, which is added according to the claimed invention. In particular, by including nigrosine according to the claimed invention, the fluidity of the semiaromatic polyamide resin composition during melt processing is improved, the melt processing temperature is decreased and at the same time, the retention stability can be improved, and consequently, the obtained formed body is improved in the surface exterior appearance.

In the present invention, the method for producing the resin composition of the present invention by mixing the semiaromatic polyamide (A), the polyhydric alcohol (B), and the fibrous reinforcing material (C) added if necessary, other additives added if necessary and the like is not particularly limited; a melt kneading method is preferable as the method for producing the resin composition of the present invention.

Examples of the melt kneading method include the methods using a batch type kneader such as a Brabender, a Banbury mixer, a Henschel mixer, a helical rotor, a roll, a single screw extruder and a twin screw extruder. As long as the melt kneading temperature is the temperature at which the semiaromatic polyamide (A) is melted and not decomposed, the melt kneading temperature is not particularly limited; however, when the melt kneading temperature is too high, the semiaromatic polyamide (A) is decomposed, and accordingly, the melt kneading temperature is preferably (melting point of semiaromatic polyamide - 20°C) or higher and (melting point of semiaromatic polyamide + 40°C) or lower.

The molten resin composition can be processed into various shapes by, for example, a method in which the molten resin composition is extruded into a strand shape and processed into a pellet shape; a method in which the molten resin composition is hot cut or cut under water into a pellet shape; a method in which the molten resin composition is extruded into a sheet shape and subjected to cutting; or a method in which the molten resin composition is extruded into a block shape and pulverized into a powder form.

The formed body of the present invention is obtained by forming the semiaromatic polyamide resin composition. Examples of the method for forming the formed body include an injection molding method, an extrusion molding method, a blow molding method, and a sinter molding method; among these, the injection molding method is preferable because of resulting in significant improvement effects of the mechanical properties and formability.

Examples of the injection molding machine include, without being particularly limited to: a screw in-line type injection molding machine and a plunger type injection molding machine. The semiaromatic polyamide resin composition heat-melted in the cylinder of an injection molding machine is metered every shot, injected into a mold in a molten state, cooled and solidified in a predetermined shape, and then taken out as a formed body from the mold. The resin temperature during injection molding is preferably set at (melting point of semiaromatic polyamide - 20°C) or higher and lower than (melting point of semiaromatic polyamide + 40°C). The resin composition of the present invention is excellent in the fluidity during melt processing, and hence, it is not necessary to set the resin temperature during forming to be higher than required. Accordingly, the retention stability during melt processing is not impaired.

When the semiaromatic polyamide resin composition is melt processed, it is preferable to use a sufficiently dried semiaromatic polyamide resin composition pellet. When a semiaromatic polyamide resin composition having a large water content is used, the resin undergoes foaming in the cylinder of the injection molding machine, and accordingly sometimes it is difficult to obtain an optimal formed body. The water content of the semiaromatic polyamide resin composition pellet used for injection molding is preferably less than 0.3 part by mass and more preferably less than 0.1 part by mass, in relation to 100 parts by mass of the semiaromatic polyamide resin composition.

The semiaromatic polyamide resin composition of the present invention has satisfactory fluidity and retention stability during melt processing, and is effectively suppressed additionally in heat aging. Accordingly, the semiaromatic polyamide resin composition of the present invention can be suitably used as the resin for forming the formed bodies in a wide range of applications such as applications to vehicle components, electric and electronic components, miscellaneous goods and civil engineering and construction components, and can be also used as the modeling resin for 3D printers.

Examples of the vehicle components include: thermostat covers, IGBT module components of inverters, insulator members, intercooler members, exhaust finishers, power device enclosures, ECU enclosures, ECU connectors, electrical insulating materials for motors and coils and coating materials for cables. Examples of the electric and electronic components include: connectors, LED reflectors, switches, sensors, sockets, capacitors, jacks, fuse holders, relays, coil bobbins, breakers, electromagnetic switches, holders, plugs, enclosure components for electrical devices such as portable personal computers, resistors, ICs and LED housings. The semiaromatic polyamide resin composition of the present invention is effectively suppressed in heat aging and is excellent in chemical resistance, and hence can be particularly suitably used for forming vehicle components, among these, to be used for a long period of time in a high temperature environment while being exposed to various chemicals.

The semiaromatic polyamide resin composition of the present invention and the semiaromatic polyamide (A) constituting the foregoing composition can be used as modeling resins for 3D printers. Examples of the modeling method in 3D printers include: an inkjet method, a heat melt lamination method and a powder fixation method. The heat melt lamination method includes the methods such as a method melting by laser irradiation, infrared ray irradiation or heating, and the powder fixation method includes the methods such as a method blowing an adhesive against a powder-form resin.

Examples

Hereinafter, the present invention is described specifically by way of Examples. However, the present invention is not limited by these Examples.

1. Measurement Methods

The measurements of the physical properties of the semiaromatic polyamide and the semiaromatic polyamide resin composition were performed by the following methods.

(1) Melting Point

By using the differential scanning calorimeter DSC-7 (manufactured by Perkin-Elmer Corp.), in a nitrogen atmosphere, a sample was increased in temperature to 370°C at a temperature increase rate of 20°C/min, then the sample was maintained at 370°C for 5 minutes, decreased in temperature to 25°C at a temperature decrease rate of 20°C/min, further maintained at 25°C for 5 minutes, and then again increased in temperature at a temperature increase rate of 20°C/min; the temperature at the top of the endothermic peak was taken as the melting point.

(2) Relative Viscosity

The relative viscosity was measured by using 96% by mass sulfuric acid as a solvent at a concentration of 1g/dL, at 25°C.

(3) Tensile Strength and Tensile Strength Retention Rate

The tensile strength was measured by using each of the specimens 1 to 4 prepared with the below-described method, according to ISO 178. The retention stability was evaluated by determining the tensile strength retention rate (%) of the specimen 2 in relation to the specimen 1, the heat aging was evaluated by determining the tensile strength retention rate (%) of the specimen 3 in relation to the specimen 1, and the hydrolyzability was evaluated by determining the tensile strength retention rate (%) of the specimen 4 in relation to the specimen 1.

<Specimen 1> (Specimen Prepared under Standard Conditions)

The semiaromatic polyamide resin composition was injection molded by using the injection molding machine Model S2000i-100B (manufactured by Fanuc Corp.), under the conditions of the cylinder temperature of (melting point of semiaromatic polyamide + 15°C, the mold temperature of (melting point of semiaromatic polyamide - 175°C) and the residence time in the cylinder of 10 seconds, to prepare the specimen 1 (ISO multipurpose test specimen). In Reference Examples 24 to 28 and Example 35, the cylinder temperature was set at (melting point of semiaromatic polyamide + 5°C); in Examples 33 and 34, the cylinder temperature was set at (melting point of semiaromatic polyamide + 10°C); and in Comparative Example 3, the cylinder temperature was set at (melting point of polyamide + 20°C).

<Specimen 2> (Specimen for Evaluation of Retention Stability, Retention Treatment for 600 Seconds)

The specimen 2 (ISO multipurpose test specimen) was prepared by injection molding under the same conditions as in the case of the specimen 1 except that the residence time in the cylinder was set at 600 seconds. The residence time in the cylinder was set at 600 seconds by regulating the cooling time.

<Specimen 3> (Specimen for Evaluation of Heat Aging, Heat Treatment at 200°C for 1000 hours)

The specimen 1 was heat treated in a hot air furnace at 200°C for 1000 hours to prepare the specimen 3.

<Specimen 4> (Specimen for Evaluation of Hydrolyzability, Autoclave Treatment at 130°C for 100 hours)

The specimen 4 was prepared by immersing the specimen 1 in a two-fold water-diluted solution of the LLC liquid (Long Life Coolant V9230-0102, red, manufactured by Castle Co.) in an autoclave, treated at 130°C for 100 hours.

(4) Melt Flow Rate

The melt flow rate was measured according to JIS K7210, at a temperature of the melting point of the semiaromatic polyamide + 20°C, under a load of 1.2 kgf.

(5) Deflection Temperature under Load

The deflection temperature under load was measured by using the specimen 1, according to ISO 75-1, 2, under a load of 1.8 MPa.

(6) Surface Exterior Appearance

The surface exterior appearance of the specimen 1 was visually observed, and evaluated on the basis of the following standards.

E(Excellent): The fibrous reinforcing material does not come up to the surface, and the surface is free from roughness.
G(Good): The fibrous reinforcing material is found to come up to the surface, or the surface has roughness.
P(Poor): The fibrous reinforcing material comes up to the surface, and the surface has roughness.

(7) Crystallization Degree Index during Low-Temperature Forming

A specimen 5 was prepared by injection molding under the same conditions as in the case of the specimen 1 except that the mold temperature was set at (melting point of semiaromatic polyamide - 255°C); for the obtained specimen 5 and the specimen 1, the ratio of the heat of crystal fusion was calculated from the following formula, and was taken as the crystallization degree index.
The heats of crystal fusion of the specimens 1 and 5 were each determined on the basis of the following formula from the endothermic peak and the exothermic peak observed when the temperature was increased to 370°C at a temperature increase rate of 20°C/min by using the differential scanning calorimeter DSC-7 (manufactured by Perkin-Elmer Corp.), in a nitrogen atmosphere.

```
Heat of crystal fusion = (endothermic peak [J/g]) -
(exothermic peak[J/g])
```

```
Crystallization degree index (%) = (heat of crystal
fusion [J/g] of specimen 5)/(heat of crystal fusion [J/g]
of specimen 1) × 100
```

(8) Chemical Resistance

The specimen 5 was immersed in each of chemicals at 20°C for 1 week, and whether or not a large deformation or dissipation occurred was examined. When neither a large deformation nor dissipation occurred, the weight variation rate after treatment was calculated from the following formula. The chemicals used for the test are 60% sulfuric acid, meta-cresol and ethylene glycol.
When a large deformation or dissipation was found to occur in the specimen 5 after the immersion, the evaluation was evaluated as "P(Poor)"; when a large deformation or dissipation was not found to occur, the weight variation rate was listed.
Weight variation rate (%) = (weight before immersion - weight after immersion)/(weight before immersion) × 100

2. Raw Materials

The raw materials used in Examples and Comparative Examples are shown below.

(1) Aromatic Dicarboxylic Acid Components

- TPA: Terephthalic acid
- IPA: Isophthalic acid

(2) Aliphatic Diamine Components

- DDA: 1,10-Decanediamine

- NDA: 1,9-Nonanediamine
- HDA: 1,6-Hexanediamine

(3) Monocarboxylic Acids

- STA: Stearic acid (molecular weight: 284)
- BA: Benzoic acid (molecular weight: 122)

(4) Polyhydric alcohols

- B-1: Dipentaerythritol (Di-Pentarit, manufactured by Koei Chemical Co., Ltd.)
- B-2: Bisphenoxyethanol fluorene (BPEF, manufactured by Osaka Gas Chemicals Co., Ltd.)
- B-3: Ester formed of dipentaerythritol and adipic acid (PLENLIZER ST-210, manufactured by Ajinomoto Fine-Techno Co., Ltd.).
- B-4: Polyvinyl butyral (Mowital B75H, manufactured by Kuraray Co., Ltd.)

(5) Monoalcohol

- B-5: Stearyl alcohol (Conol 30SS, manufactured by New Japan Chemical Co., Ltd.)

(6) Fibrous Reinforcing Materials

- C-1: Glass fiber (T-262H, average fiber diameter: 10.5 $\mu$m, average fiber length: 3 mm, using coating film forming agent containing acid copolymer, manufactured by Nippon Electric Glass Co., Ltd.)
- C-2: Glass fiber (T-249H, average fiber diameter: 10.5 $\mu$m, average fiber length: 3 mm, using coating film forming agent containing urethane resin, manufactured by Nippon Electric Glass Co., Ltd.)
- C-3: Carbon fiber (HTA-C6-NR, average fiber diameter: 7 $\mu$m, average fiber length: 6 mm, manufactured by Toho Tenax Co., Ltd.)

(7) Polyamides other than semiaromatic polyamide (A)

- P-1: Polyamide 66 (A125J, melting point: 265°C, manufactured by Unitika Ltd.)
- P-2: Polyamide 6 (A1030BRL, melting point: 225°C, manufactured by Unitika Ltd.)
- P-3: Polyamide 6T/6I (Grivory G21, amorphous, manufactured by EMS-CHEMIE (Japan) Ltd.)
- P-4: As Polyamide 10C, a polyamide produced by the following method was used.

In an autoclave having an internal volume of 40 L, 5111.2 g (29.7 mol) of 1,4-cyclohexane dicarboxylic acid having a cis:trans ratio of 70:30, 5271.0 g (30.59 mol) of 1,10-decanediamine, 224.2 g(1.84 mol) of benzoic acid as a terminal blocking agent, 10 g of sodium hypophosphite monohydrate and 2.5 L of distilled water were placed, and the air in the autoclave was replaced with nitrogen. The internal temperature was increased to 200°C over 2 hours. In this case, the pressure of the autoclave was increased to 2 MPa. Subsequently, for 2 hours, while the internal temperature was being maintained at 215°C, and the pressure was being maintained at 2 MPa by gradually extracting the water vapor, the reaction was allowed to proceed. Next, the pressure was decreased to 1.2 MPa over 30 minutes, to yield a prepolymer. The resulting prepolymer was crushed to a size of 1 mm or less, and was dried at 120°C for 12 hours under reduced pressure. The thus treated prepolymer was subjected to solid phase polymerization for 10 hours under the conditions of a temperature of 230°C and a pressure of 13.3 Pa, and thus a polyamide (P-4) (polyamide 10C) having a melting point of 312°C was obtained.

(8) Stabilizers

[Antioxidants]

- AO-1: Bis(2,6-di-tert-butyl-4-methylphenyl)pentaerythritol diphosphite (phosphorus-based antioxidant, Adeka Stab PEP-36, manufactured by Adeka Corp.)
- AO-2: 3,9-Bis[2-{3-(3-t-butyl-4-hydroxy-5-methylphenyl)propionyloxy}-1,1-dimethylethyl]-2,4,8,10-tetraoxaspiro(5,5)undecane (hindered phenol antioxidant, Adeka Stab AO-80, manufactured by Adeka Corp.)

[Light Stabilizer]

- S-1: 2-Ethyl-2-ethoxy-oxal anilide (hindered amine light stabilizer, Nylostab S-EED, manufactured by Clariant Japan K.K.)

[Heat Stabilizers]

- H-1: Copper iodide (Guaranteed Reagent)
- H-2: Potassium iodide (Guaranteed Reagent)

(9) Colorant

• N-1: Nigrosine (Solvent Black 7, NUBIAN BLACK TH-807, manufactured by Orient Chemical Industries Co., Ltd.)

Production Example 1

• Semiaromatic Polyamide (A-1)

In a ribbon blender-type reaction apparatus, 4.70 kg of terephthalic acid (TPA) in a power form as the aromatic dicarboxylic acid component, 0.32 kg of stearic acid (STA) as the monocarboxylic acid component and 9.3 g of sodium hypophosphite monohydrate as the polymerization catalyst were placed, and were heated to 170°C while the resulting mixture was being stirred at a number of rotations of 30 rpm under sealing with nitrogen. Subsequently, while the temperature was being maintained at 170°C and the number of rotations was being maintained at 30 rpm, by using a liquid injection apparatus, 4.98 kg of 1,10-decanediamine (DDA) heated to 100°C was added to the above-described mixture as the aliphatic diamine component, continuously (continuous liquid injection method) over 2.5 hours, and thus a reaction product was obtained. The molar ratio between the raw material monomers was TPA:DDA:STA=48.5:49.6:1.9 (the equivalent ratio between the functional groups of the raw material monomers was TPA:DDA:STA=49.0:50.0:1.0
Successively, the obtained reaction product was heated for 8 hours in the same reaction apparatus to be polymerized in a flow of nitrogen gas at 250°C, at a number of rotations of 30 rpm, and thus, a powder of a semiaromatic polyamide was prepared.
Subsequently, the obtained powder of the semiaromatic polyamide was converted into a strand shape by using a twin screw kneading machine, the strand was made to pass through a water tank to be cooled and solidified, and the solidified strand was cut into a pellet with a pelletizer to yield a semiaromatic polyamide (A-1) pellet.

• Semiaromatic Polyamides (A-2) to (A-10)

The semiaromatic polyamides (A-2) to (A-10) were obtained in the same manner as in the case of the semiaromatic polyamide (A-1) except that then resin compositions were altered as shown in Table 1.
Table 1 shows the resin compositions and the values of the properties of the obtained semiaromatic polyamides.

[Table 1]

| | | Composition of semiaromatic polyamide (A) | | | | | | | Values of properties | |
|---|---|---|---|---|---|---|---|---|---|---|
| | | Aromatic dicarboxylic acid component | | Aliphatic diamine component | | Monocarboxylic acid component | | | Melting point | Relative viscosity |
| | | Type | Content | Type | Content | Type | Molecular weight | Content | | |
| | | | mol% | | mol% | | | mol% | °C | |
| Semiaromatic polyamides | A-1 | TPA | 48.5 | DDA | 49.6 | STA | 284 | 1.9 | 317 | 2.25 |
| | A-2 | TPA | 49.3 | DDA | 50.4 | STA | 284 | 0.3 | 317 | 3.50 |
| | A-3 | TPA | 49.1 | DDA | 50.0 | STA | 284 | 0.9 | 317 | 2.71 |
| | A-4 | TPA | 47.0 | DDA | 49.4 | STA | 284 | 3.6 | 310 | 1.85 |
| | A-5 | TPA | 48.5 | DDA | 49.6 | BA | 122 | 1.9 | 317 | 2.24 |
| | A-6 | TPA | 48.5 | NDA | 49.6 | STA | 284 | 1.9 | 310 | 2.15 |
| | A-7 | TPA | 48.5 | HDA | 49.6 | STA | 284 | 1.9 | 345 | 2.02 |
| | A-8 | TPA | 48.5 | DDA HDA | 47.1 2.5 | STA | 284 | 1.9 | 311 | 2.20 |
| | A-9 | TPA IPA | 24.25 24.25 | DDA | 49.6 | STA | 284 | 1.9 | *** | 2.10 |
| | A-10 | TPA | 48.5 | DDA HDA | 34.7 14.9 | STA | 284 | 1.9 | 295 | 2.16 |

TPA: Terephthalic acid, IPA: Isophthalic acid
DDA: 1,10-Decanediamine, NDA: 1,9-Nonanediamine, HDA: 1,6-Hexanediamine
STA: Stearic acid, BA: Benzoic acid

Reference Example 1 A mixture was prepared by dry blending 99 parts by mass of the semiaromatic polyamide (A-1) and 1 part by mass of the polyhydric alcohol (B-1), and the resulting mixture was metered by using the loss-in-weight type continuous metering feeder CE-W-1 (manufactured by Kubota Corp.) and fed for melt kneading to the main feeding port of the same direction twin screw extruder TEM26SS (manufactured by Toshiba Machine Co., Ltd.) having a screw diameter of 26 mm with L/D50. On the way, from the side feeder, 45 parts by mass of the fibrous reinforcing material (C-1) was fed and the resulting mixture was further kneaded. The kneaded mixture was taken out from the die into a strand shape, and then allowed to pass through a water tank to be cooled and solidified; the solidified product was cut with a pelletizer to yield a semiaromatic polyamide resin composition pellet. The barrel temperature of the extruder was set at (melting point of semiaromatic polyamide + 5°C) to (melting point of semiaromatic polyamide + 15°C), the screw rotation number was set at 250 rpm, and the discharge rate was set at 25 kg/h.

Reference Examples 2 to 32, Examples 33-35 and Comparative Examples 1 to 7 In each of Examples 2 to 35 and Comparative Examples 1 to 7, a semiaromatic polyamide resin composition pellet was obtained by performing the same operations as in Example 1 except that the composition of the semiaromatic polyamide resin composition was altered as shown in Table 2 or Table 3. Reference Examples 1 to 32 relate to non-claimed aspects of the present disclosure while Examples 33 to 35 are according to the claimed invention.

In Comparative Example 1, the barrel temperature was set at 300°C.

By using the obtained semiaromatic polyamide resin composition pellets, the various evaluation tests were performed. The results thus obtained are shown in Tables 2 and 3.

[Table 2]

| | | Composition of semiaromatic polyamide resin composition (part(s) means part(s) by mass) | | | | | | | | | | | Properties | | | | | | | | | |
|---|---|---|---|---|---|---|---|---|---|---|---|---|---|---|---|---|---|---|---|---|---|---|---|
| | | Semiaromatic polyamides (A) | | Polyhydric alcohol (B) | | Fibrous reinforcing material (C) | | Other polyamide | | Stabilizer | | Colorant | Tensile strength — Standard conditions | Retention stability — After retention treatment for 600 sec | Heat aging — After heat treatment at 200°C for 1000 hours | Hydrolyzability — After autoclave treatment at 130°C for 100 hours | Melt flow rate (g/10 min) | Deflection temperature under load | Surface exterior appearance | Crystallization degree index | Chemical resistances — Weight variation rates (%) before and after immersion | | |
| | | Type | part(s) | Type | part(s) | Type | part(s) | Type | part(s) | Type | part(s) | part(s) | MPa | Tensile strength retention rates (%) | | | | °C | | % | 60% Sulfuric acid | meta-Cresol | Ethylene glycol |
| Examples | 1 | A-1 | 99 | B-1 | 1 | C-1 | 45 | – | – | – | – | – | 168 | 79 | 76 | 65 | 18 | 305 | G | 96 | 2.0 | 0.2 | 0.1 |
| | 2 | A-2 | 99 | B-1 | 1 | C-1 | 45 | – | – | – | – | – | 180 | 91 | 78 | 69 | 3 | 308 | G | 91 | 2.0 | 0.2 | 0.1 |
| | 3 | A-3 | 99 | B-1 | 1 | C-1 | 45 | – | – | – | – | – | 175 | 87 | 77 | 68 | 9 | 307 | G | 93 | 2.0 | 0.2 | 0.1 |
| | 4 | A-4 | 99 | B-1 | 1 | C-1 | 45 | – | – | – | – | – | 122 | 74 | 75 | 63 | 50 | 300 | G | 97 | 2.0 | 0.2 | 0.1 |
| | 5 | A-5 | 99 | B-1 | 1 | C-1 | 45 | – | – | – | – | – | 165 | 79 | 75 | 65 | 15 | 304 | G | 93 | 2.9 | 0.7 | 0.5 |
| | 6 | A-6 | 99 | B-1 | 1 | C-1 | 45 | – | – | – | – | – | 149 | 77 | 74 | 66 | 24 | 298 | G | 88 | 3.5 | 1.3 | 1.6 |

| No. | A | | B | | C | | | | | | | | | | | | | | | | | |
|---|---|---|---|---|---|---|---|---|---|---|---|---|---|---|---|---|---|---|---|---|---|---|
| 7 | A-7 | 99 | B-1 | 1 | C-1 | 45 | - | - | - | - | - | 137 | 71 | 78 | 63 | 37 | 331 | G | 95 | 2.7 | 0.3 | 0.2 |
| 8 | A-8 | 99 | B-1 | 1 | C-1 | 45 | - | - | - | - | - | 156 | 79 | 75 | 60 | 21 | 301 | G | 84 | 3.7 | 2.0 | 1.7 |
| 9 | A-1, A-6 | 99.5 | B-1 | 1 | C-1 | 48 | - | - | - | - | - | 167 | 78 | 82 | 66 | 22 | 302 | E | 90 | 2.2 | 0.2 | 0.1 |
| 10 | A-1 | 99.95 | B-1 | 0.05 | C-1 | 45 | - | - | - | - | - | 165 | 86 | 61 | 64 | 14 | 306 | G | 96 | 2.5 | 0.6 | 0.3 |
| 11 | A-1 | 99.8 | B-1 | 0.2 | C-1 | 45 | - | - | - | - | - | 167 | 81 | 68 | 64 | 15 | 306 | G | 96 | 2.3 | 0.4 | 0.2 |
| 12 | A-1 | 99.2 | B-1 | 0.8 | C-1 | 45 | - | - | - | - | - | 168 | 79 | 74 | 66 | 17 | 305 | G | 96 | 2.0 | 0.2 | 0.1 |
| 13 | A-1 | 97 | B-1 | 3 | C-1 | 45 | - | - | - | - | - | 163 | 77 | 82 | 66 | 25 | 300 | G | 96 | 2.0 | 0.2 | 0.1 |
| 14 | A-1 | 92 | B-2 | 8 | C-1 | 45 | - | - | - | - | - | 157 | 73 | 82 | 64 | 31 | 296 | G | 94 | 2.0 | 0.2 | 0.1 |
| 15 | A-1 | 90 | B-3 | 10 | C-1 | 45 | - | - | - | - | - | 154 | 71 | 81 | 62 | 34 | 294 | G | 92 | 2.0 | 0.2 | 0.1 |
| 16 | A-1 | 99 | B-4 | 1 | C-1 | 45 | - | - | - | - | - | 168 | 80 | 74 | 67 | 15 | 303 | G | 95 | 2.0 | 0.2 | 0.1 |
| 17 | A-1 | 99 | B-1 | 1 | C-1 | 45 | - | - | - | - | - | 170 | 82 | 76 | 65 | 17 | 305 | G | 95 | 0.1 | 0.2 | 0.1 |
| 18 | A-1 | 99 | B-1 | 1 | C-1 | 45 | - | - | - | - | - | 165 | 77 | 73 | 67 | 17 | 304 | G | 95 | 0.1 | 0.2 | 0.1 |
| 19 | A-1 | 99 | B-1 | 1 | - | - | - | - | - | - | - | 72 | 85 | 65 | 85 | 78 | 122 | E | 94 | 2.9 | 0.3 | 0.2 |
| 20 | A-1 | 99 | B-1 | 1 | C-1 | 15 | - | - | - | - | - | 103 | 78 | 74 | 66 | 42 | 231 | G | 95 | 2.5 | 0.2 | 0.1 |
| 21 | A-1 | 99 | B-1 | 1 | C-1 | 100 | - | - | - | - | - | 230 | 85 | 83 | 77 | 11 | 309 | G | 97 | 1.5 | 0.2 | 0.1 |
| 22 | A-1 | 99 | B-1 | 1 | C-2 | 45 | - | - | - | - | - | 164 | 89 | 76 | 54 | 18 | 305 | G | 96 | 2.0 | 0.2 | 0.1 |
| 23 | A-1 | 99 | B-1 | 1 | C-3 | 45 | - | - | - | - | - | 230 | 82 | 75 | 80 | 15 | 304 | G | 95 | 2.0 | 0.2 | 0.1 |

[Table 3]

| | | Composition of semiaromatic polyamide resin composition (part(s) means part(s) by mass) | | | | | | | | | | | Properties | | | | | | | | | | |
|---|---|---|---|---|---|---|---|---|---|---|---|---|---|---|---|---|---|---|---|---|---|---|---|
| | | Semiaromatic polyamides (A) | | Polyhydric alcohol (B) | | Fibrous reinforcing material (C) | | Other polyamide | | Stabilizer | | Colorant | Tensile strength Standard conditions | Retention stability After retention treatment for 600 sec | Heat aging After heat treatment at 200°C for 1000 hours | Hydrolyzability After autoclave treatment at 130°C for 100 hours | Melt flow rate (g/ 10 min) | Deflection temperature under load | Surface exterior appearance | Crystallization degree index | Chemical resistances Weight variation rates (%) before and after immersion | | |
| | | Type | part(s) | Type | part(s) | Type | part(s) | Type | part(s) | Type | part(s) | part(s) | MPa | Tensile strength retention rates (%) | | | | °C | | % | 60% Sulfuric acid | meta-Cresol | Ethylene glycol |
| Examples | 24 | A-1 | 99 | B-1 | 1 | C-1 | 48 | P-1 | 5 | – | – | – | 172 | 85 | 79 | 66 | 28 | 291 | E | 88 | 2.2 | 0.2 | 0.1 |
| | 25 | A-1 | 99 | B-1 | 1 | C-1 | 60 | P-1 | 30 | – | – | – | 165 | 80 | 86 | 68 | 41 | 280 | E | 82 | 2.5 | 0.2 | 0.1 |
| | 26 | A-1 | 99 | B-1 | 1 | C-1 | 48 | P-2 | 5 | – | – | – | 168 | 82 | 80 | 65 | 32 | 287 | E | 87 | 2.2 | 0.2 | 0.1 |
| | 27 | A-1 | 99 | B-1 | 1 | C-1 | 48 | P-3 | 5 | – | – | – | 166 | 84 | 81 | 63 | 25 | 294 | E | 86 | 2.2 | 0.2 | 0.1 |
| | 28 | A-1 | 99 | B-1 | 1 | C-1 | 48 | P-4 | 5 | – | – | – | 167 | 80 | 80 | 63 | 21 | 301 | E | 90 | 2.0 | 0.2 | 0.1 |
| | 29 | A-1 | 99 | B-1 | 1 | C-1 | 45 | – | – | AO- | 0. | – | 170 | 79 | 79 | 67 | 18 | 305 | G | 96 | 2.0 | 0. | 0. |

| | | | | | | | | | | 1 | 2 | | | | | | | | | | 2 | 1 |
|---|---|---|---|---|---|---|---|---|---|---|---|---|---|---|---|---|---|---|---|---|---|---|
| 30 | A-1 | 99 | B-1 | 1 | C-1 | 45 | – | – | AO-2 | 0.2 | – | 170 | 82 | 78 | 66 | 18 | 305 | G | 96 | 2.0 | 0.2 | 0.1 |
| 31 | A-1 | 99 | B-1 | 1 | C-1 | 45 | – | – | AO-1 AO-2 | 0.2 0.2 | – | 170 | 83 | 80 | 66 | 18 | 305 | G | 96 | 2.0 | 0.2 | 0.1 |
| 32 | A-1 | 99 | B-1 | 1 | C-1 | 45 | – | – | S-1 | 0.2 | – | 170 | 82 | 78 | 67 | 18 | 305 | G | 96 | 2.0 | 0.2 | 0.1 |
| 33 * | A-1 | 99 | B-1 | 1 | C-1 | 45 | – | – | – | – | 0.2 | 168 | 83 | 76 | 64 | 19 | 304 | E | 93 | 2.0 | 0.2 | 0.1 |
| 34 * | A-1 | 99 | B-1 | 1 | C-1 | 45 | – | – | – | – | 1 | 163 | 82 | 77 | 63 | 26 | 300 | E | 90 | 2.0 | 0.2 | 0.1 |
| 35 * | A-1 | 99 | B-1 | 1 | C-1 | 45 | P-1 | 5 | – | – | 1 | 168 | 81 | 76 | 61 | 33 | 288 | E | 86 | 2.2 | 0.2 | 0.1 |
| 1 | A-9 | 99 | B-1 | 1 | C-1 | 45 | – | – | – | – | – | 160 | 79 | 75 | 60 | 25 | 115 | E | – | P | P | P |
| 2 | A-10 | 99 | B-1 | 1 | C-1 | 45 | – | – | – | – | – | 164 | 77 | 72 | 62 | 22 | 272 | E | 76 | P | P | P |
| 3 | – | – | B-1 | 1 | C-1 | 45 | P-1 | 99 | – | – | – | 176 | 80 | 68 | 66 | 21 | 250 | E | 63 | P | P | P |
| 4 | A-1 | 100 | – | – | C-1 | 45 | – | – | – | – | – | 165 | 90 | 41 | 68 | 13 | 306 | P | 95 | 2.3 | 0.7 | 0.5 |
| 5 | A-1 | 100 | – | – | C-1 | 45 | – | – | H-1 H-2 | 0.02 0.1 | – | 172 | 60 | 50 | 59 | 12 | 305 | G | 95 | 2.3 | 0.7 | 0.5 |
| 6 | A-1 | 99 | B-5 | 1 | C-1 | 45 | – | – | – | – | – | 164 | 77 | 59 | 65 | 15 | 303 | P | 95 | 2.1 | 0.2 | 0.1 |
| 7 | A-1 | 88 | B-1 | 12 | C-1 | 45 | – | – | – | – | – | 147 | 67 | 82 | 61 | 39 | 287 | P | 91 | 2.2 | 0.2 | 0.1 |

Comparative Examples

* Examples according to the claimed invention

The resin compositions of Reference Examples 1 to 32 and Examples 33-35 each had the heat resistance and mechanical properties intrinsic to the semiaromatic polyamide, and at the same time were suppressed in heat aging, and were excellent additionally in the fluidity during melt processing and the retention stability, and the surface exterior appearance.

In Reference Examples 1 to 4, the lower was the relative viscosity of the semiaromatic polyamide (Reference Examples 1 and 4), the more excellent was the fluidity during melt processing; the higher was the relative viscosity of the semiaromatic polyamide (Reference Examples 2 and 3), the more excellent was the retention stability.

In Reference Example 1, the monocarboxylic acid component of the semiaromatic polyamide resin was an aliphatic monocarboxylic acid, and hence Reference Example 1 was excellent in the fluidity during melt processing as compared with Reference Example 5 in which the monocarboxylic acid component was an aromatic monocarboxylic acid.

In Reference Example 1, the aliphatic diamine component of the semiaromatic polyamide resin was 1,10-decanediamine, and hence Reference Example 1 was higher in mechanical properties as compared with Reference Example 6 in which the aliphatic diamine component was 1,9-nonanediamine; in Reference Example 1, the crystallinity was high, and hence the deflection temperature under load was high and the heat resistance was high. In Reference Example 7, the aliphatic diamine component was 1,6-hexanediamine; Reference Example 7 was higher in the deflection temperature under load as compared with Reference Example 1; however, in Reference Example 7, the melting point of the semiaromatic polyamide was higher, and hence the processing temperature was high and poor in the retention stability. In Reference Example 1, the semiaromatic polyamide resin was of the homopolymer type; and accordingly, as compared with Reference Example 8 and Comparative Example 2 in which the semiaromatic polyamide resin was of the copolymer type, Reference Example 1 was higher in the crystallization degree index during low-temperature forming, and yielded a formed body high in the crystallization degree even with a low-temperature mold.

In Reference Example 9, the resin composition included two semiaromatic polyamides (A) different from each other in the constituent monomer components; accordingly, as compared with Reference Example 1 and Reference 2 Example 6, in each of which the resin composition included a single semiaromatic polyamide (A), Reference Example 9 was suppressed in the heat aging and excellent in the surface exterior appearance.

In each of Reference Examples 1 and 10 to 15, the larger was the content of the polyhydric alcohol, the more the heat aging of the resin composition was suppressed, but such a suppression effect was saturated in the high concentration region of the polyhydric alcohol; the larger was the content of the polyhydric alcohol, the slightly poorer was the retention stability of the resin composition.

In Reference Example 1, the semiaromatic polyamide resin composition included a glass fiber surface-treated with a coating film forming agent copolymerized with an acid component, and hence as compared with Reference Example 22 in which no acid component is copolymerized with the coating film forming agent, Reference Example 1 was excellent in the hydrolysis resistance.

In each of Reference Examples 24 to 28, as compared with Reference Example 1, the resin composition including the other polyamide was excellent in the fluidity during melt processing, was suppressed in heat aging and was excellent in the surface exterior appearance.

In each of Reference Examples 29 to 32, as compared with Reference Example 1, the resin composition including at least one stabilizer was excellent in the retention stability and was suppressed in heat aging. In each of Examples 33 and 34, the resin composition including nigrosine as a black dye was excellent in the fluidity during melt processing and in the surface exterior appearance. In Example 35, as compared with Reference Example 24 and Example 34 singly including the other polyamide and nigrosine, respectively, but not including the other polyamide and nigrosine in combination, the resin composition in which the other polyamide and nigrosine were used in combination was more excellent in the fluidity during melt processing.

In Reference Example 1, the molecular weight of the monocarboxylic acid component in the semiaromatic polyamide resin was 140 or more, and the polyhydric alcohol was included, and hence the chemical resistance was synergistically improved, as compared with Reference Example 5 in which the foregoing molecular weight was smaller than 140 and Comparative Examples 4 and 5 each including no polyhydric alcohol.

The resin composition of Comparative Example 1 included a semiaromatic polyamide resin having no melting point, and hence was low in the deflection temperature under load. The resin composition of Comparative Example 2 included a copolymer-type semiaromatic polyamide having a melting point of lower than 300°C, and hence was low in the deflection temperature under load, and low in the crystallization degree index during low-temperature forming. The resin composition of Comparative Example 3 included, as the polyamide resin, polyamide 66 having a melting point of 265°C, and hence was remarkable in heat aging and low in the deflection temperature under load.

The resin composition of Comparative Example 4 included no polyhydric alcohol, and hence was remarkable in heat aging. The resin composition of Comparative Example 5 included no polyhydric alcohol and included copper iodide and potassium iodide, and hence was remarkable in heat aging and poor in the retention stability. The resin composition of Comparative Example 6 did not include any polyhydric alcohol but included a monoalcohol, and hence was remarkable in heat aging. The resin composition of Comparative Example 7 was large in the content of the polyhydric alcohol, accordingly underwent the generation of a large amount of the gas of the polyhydric alcohol during melt processing, and was poor in the retention stability; the obtained formed body underwent the bleeding out of the polyhydric alcohol to the surface thereof to be poor in exterior appearance.

**Claims**

1. A semiaromatic polyamide resin composition comprising a semiaromatic polyamide (A), a polyhydric alcohol (B), and nigrosine,

    wherein a mass ratio (A/B) between the semiaromatic polyamide (A) and the polyhydric alcohol (B) is 99.95/0.05 to 90/10; and
    the semiaromatic polyamide (A) includes as constituent components thereof an aromatic dicarboxylic acid component, an aliphatic diamine component that is 1,10-decanediamine alone and a monocarboxylic acid component that is an aliphatic acid having a molecular weight of 140 g/mol or more, and has a melting point of 300 to 350°C.

2. The semiaromatic polyamide resin composition according to claim 1, wherein a content of the monocarboxylic acid component is 0.3 to 4.0 mol% in relation to a whole of monomer components constituting the semiaromatic polyamide (A) .

3. The semiaromatic polyamide resin composition according to claim 1 or 2, wherein the polyhydric alcohol (B) is dipentaerythritol.

4. The semiaromatic polyamide resin composition according to any one of claims 1 to 3, wherein the polyhydric alcohol (B) forms at least one ester bond with a carboxylic acid, leaving two or more hydroxyl groups of the polyhydric alcohol.

5. The semiaromatic polyamide resin composition according to any one of claims 1 to 4, further comprising 5 to 200 parts by mass of a fibrous reinforcing material (C) in relation to 100 parts by mass of a total amount of the semiaromatic polyamide (A) and the polyhydric alcohol (B).

6. The semiaromatic polyamide resin composition according to claim 5, wherein the fibrous reinforcing material (C) is treated with a surface treatment agent including an acid component.

7. The semiaromatic polyamide resin composition according to claim 5 or 6, wherein the fibrous reinforcing material (C) is a glass fiber and/or a carbon fiber.

8. The semiaromatic polyamide resin composition according to any one of claims 1 to 7, further comprising a polyamide other than the semiaromatic polyamide (A).

9. A formed body obtained by forming the semiaromatic polyamide resin composition according to any one of claims 1 to 8.

**Patentansprüche**

1. Teilaromatische Polyamidharz-Zusammensetzung, die ein teilaromatisches Polyamid (A), einen mehrwertigen Alkohol (B) und Nigrosin umfasst,

    wobei ein Massenverhältnis (A/B) zwischen dem teilaromatischen Polyamid (A) und dem mehrwertigen Alkohol (B) 99,95/0,05 bis 90/10 beträgt; und
    das teilaromatische Polyamid (A) als Bestandteile davon eine aromatische Dicarbonsäurekomponente, eine aliphatische Diaminkomponente, die 1,10-Decandiamin allein ist, und eine Monocarbonsäurekomponente umfasst, die eine aliphatische Säure ist, die ein Molekulargewicht von 140 g/mol oder höher aufweist, und einen Schmelzpunkt von 300 bis 350 °C aufweist.

2. Teilaromatische Polyamidharz-Zusammensetzung nach Anspruch 1, wobei ein Gehalt der Monocarbonsäurekomponente, bezogen auf ein Ganzes der Monomerkomponenten, die das teilaromatische Polyamid (A) bilden, 0,3 bis 4,0 Mol-% beträgt.

3. Teilaromatische Polyamidharz-Zusammensetzung nach Anspruch 1 oder 2, wobei der mehrwertige Alkohol (B) Dipentaerythritol ist.

4. Teilaromatische Polyamidharz-Zusammensetzung nach einem der Ansprüche 1 bis 3, wobei der mehrwertige Alkohol (B) mindestens eine Esterbindung mit einer Carbonsäure bildet, die zwei oder mehr Hydroxylgruppen des mehrwertigen Alkohols übrig lässt.

5. Teilaromatische Polyamidharz-Zusammensetzung nach einem der Ansprüche 1 bis 4, die ferner 5 bis 200 Massenteile eines verstärkenden Fasermaterials (C), bezogen auf 100 Massenteile einer Gesamtmenge des teilaromatischen Polyamids (A) und des mehrwertigen Alkohols (B), umfasst.

6. Teilaromatische Polyamidharz-Zusammensetzung nach Anspruch 5, wobei das verstärkende Fasermaterial (C) mit einem Oberflächenbehandlungsmittel behandelt ist, das eine Säurekomponente umfasst.

7. Teilaromatische Polyamidharz-Zusammensetzung nach Anspruch 5 oder 6, wobei das verstärkende Fasermaterial (C) eine Glasfaser und/oder eine Kohlenstofffaser ist.

8. Teilaromatische Polyamidharz-Zusammensetzung nach einem der Ansprüche 1 bis 7, die ferner ein Polyamid umfasst, das sich von dem teilaromatischen Polyamid (A) unterscheidet.

9. Formkörper, der durch Formen der teilaromatischen Polyamidharz-Zusammensetzung nach einem der Ansprüche 1 bis 8 erhalten wird.

## Revendications

1. Composition de résine de polyamide semi-aromatique comprenant un polyamide semi-aromatique (A), un alcool polyhydrique (B), et de la nigrosine, dans laquelle

   le rapport en masse (A/B) entre le polyamide semi-aromatique (A) et l'alcool polyhydrique (B) est de 99,95/0,05 à 90/10 ; et
   le polyamide semi-aromatique (A) contient en tant que composants constitutifs de celui-ci un composant acide dicarboxylique aromatique, un composant diamine aliphatique qui est la 1,10-décanediamine seule et un composant acide monocarboxylique qui est un acide aliphatique ayant une masse moléculaire de 140 g/mol ou plus, et a un point de fusion de 300 à 350°C.

2. Composition de résine de polyamide semi-aromatique selon la revendication 1, dans laquelle la teneur en le composant acide monocarboxylique est de 0,3 à 4,0 % en moles par rapport à la totalité des composants monomères constituant le polyamide semi-aromatique (A).

3. Composition de résine de polyamide semi-aromatique selon la revendication 1 ou 2, dans laquelle l'alcool polyhydrique (B) est le dipentaérythritol.

4. Composition de résine de polyamide semi-aromatique selon l'une quelconque des revendications 1 à 3, dans laquelle l'alcool polyhydrique (B) forme au moins une liaison ester avec un acide carboxylique, en laissant deux ou plus de deux groupes hydroxyle de l'alcool polyhydrique.

5. Composition de résine de polyamide semi-aromatique selon l'une quelconque des revendications 1 à 4, comprenant en outre 5 à 200 parties en masse d'un matériau de renforcement fibreux (C) pour 100 parties en masse de la quantité totale du polyamide semi-aromatique (A) et de l'alcool polyhydrique (B).

6. Composition de résine de polyamide semi-aromatique selon la revendication 5, dans laquelle le matériau de renforcement fibreux (C) est traité avec un agent de traitement de surface contenant un composant acide.

7. Composition de résine de polyamide semi-aromatique selon la revendication 5 ou 6, dans laquelle le matériau de renforcement fibreux (C) est une fibre de verre et/ou une fibre de carbone.

**8.** Composition de résine de polyamide semi-aromatique selon l'une quelconque des revendications 1 à 7, comprenant en outre un polyamide autre que le polyamide semi-aromatique (A).

**9.** Corps façonné obtenu par façonnage de la composition de résine de polyamide semi-aromatique selon l'une quelconque des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013042541 A
- JP 2000345031 A
- JP 2011529991 A
- JP 2013538927 A
- JP 2003055549 A
- WO 2013163012 A